# EUROPEAN PATENT APPLICATION

(11) **EP 4 560 371 A1**
(43) Date of publication of application: **28.05.2025**
(21) Application number: 23843330.4
(22) Date of filing: 18.07.2023
(51) Int. Cl.: G02B 6/44

(54) **OPTICAL FIBER RIBBON**

(30) Priority: 21.07.2022 KR 20220090287; 11.07.2023 KR 20230089719
(71) Applicant: LS Cable & System Ltd., Anyang-si, Gyeonggi-do 14119 (KR)
(72) Inventor: YUN, Hui Jeong, Gumi-si Gyeongsangbuk-do 39460 (KR); LEE, Man Su, Daegu 42759 (KR); LEE, Dong Soo, Anyang-si Gyeonggi-do 13993 (KR); HAM, Hyung Jae, Dalseong-gun Daegu 42914 (KR)
(74) Representative: K&L Gates LLP
(86) International application number: PCT/KR2023/010293
(87) International publication number: WO 2024/019484

(57) **Abstract**

The present invention relates to an optical fiber ribbon which, as a component included in a high-density optical cable for building a large-capacity communication network, maintains the state in which optical fibers are bonded to each other so that the optical fiber ribbon can be rolled or folded in the width direction, and simultaneously allows the separation strength between individual optical fibers configuring the optical fiber ribbon to be adjusted, thereby improving workability when branching or connecting the optical fiber ribbon in a connection area, while preventing damage to the separated optical fibers.

## Description

### [Technical Field]

The present invention relates to an optical fiber ribbon. More specifically, the present invention relates to an optical fiber ribbon that is a component included in a high-density optical cable with a high density of optical fiber core wires per unit area, designed for installation in confined spaces such as conduits to build large-capacity communication networks, enables rolling or folding in a width direction while maintaining the optical fibers in a mutually bonded state, and simultaneously adjusts the separation strength between the individual optical fibers that configure the optical fiber ribbon, thereby improving workability during branching or connection tasks for the optical fiber ribbon at the connection area and preventing damage to the separated optical fibers.

### [Background Art]

For the construction of a large-capacity optical communication network, an optical fiber ribbon, in which optical fibers are bonded side by side, may be used.

The optical fiber ribbon is an integrated structure in which a plurality of optical fibers are bonded side by side using resin or similar materials, generally manufactured in a strip form, and may be stacked to form a polygonal column-shaped ribbon stack.

Such an optical fiber ribbon is primarily utilized in large-capacity communication networks due to the advantage of enabling batch connection of a plurality of optical fibers.

In addition, to manufacture high-density optical cables, rollable optical fiber ribbons, which are flexibly deformable by being rolled or folded in the width direction, are being introduced to increase the number of optical fiber core wires accommodated within the same area of an optical cable.

Such a rollable optical fiber ribbon needs to maintain its optical fiber ribbon shape, ensuring that the bonded optical fibers do not easily separate while in a rolled state in the width direction. Further, the rollable optical fiber ribbon needs to allow for easy separation tasks of individual optical fibers even if individual optical fibers need to be separated during the connection process, while preventing any damage to the optical fibers during the separation process.

FIG. 1 illustrates an optical fiber ribbon disclosed in Korean Patent No. 10-2021-0145625. The optical fiber ribbon 100 illustrated in FIG. 1 discloses the structure of a bonding portion 20 of the ribbon. However, it does not provide any disclosure regarding the issues or their solutions as described above. Further, there is a significant demand for an optical fiber ribbon that can effectively maintain its shape in a rolled state, allow for easy separation of individual optical fibers by the operator when separating individual optical fibers at the connection part of the optical fiber ribbon, and prevent damage to the separated optical fibers.

### [Disclosure]

### [Technical Problem]

The present invention is directed to providing an optical fiber ribbon that, as a component included in a high-density optical cable, allows for flexible movements such as rolling or folding in the width direction, ensures that during the manufacturing, installation, and operation of the optical cable, the optical fiber bonding portions are not easily separated and maintain their mutually bonded state even under external forces such as bending or twisting applied to the optical fiber ribbon, and simultaneously adjusts the separation strength between individual optical fibers that configure the optical fiber ribbon, thereby improving workability during branching or connection tasks for the optical fiber ribbon at the connection area and preventing damage to the separated optical fibers.

### [Technical Solution]

To solve the aforementioned objects, there is provided an optical fiber ribbon, according to the present invention. The optical fiber ribbon may include a plurality of optical fibers bonded side by side, in which each adjacent pair of optical fibers among the plurality of optical fibers may be bonded through a plurality of bonding areas disposed spaced apart in a length direction of the optical fibers, the plurality of bonding areas may be configured with a plurality of bonding portions, which are spaced apart from each other, and one or more non-bonding portions provided between the plurality of bonding portions, a non-bonding area disposed between two adjacent bonding areas may be included, and in the non-bonding area, a plurality of non-bonded sections, where all optical fibers are not bonded in a cross-section along the length direction of the optical fiber ribbon, may be provided spaced apart from each other in a length direction of the optical fiber ribbon, the bonding portions and the non-bonding portions may be formed sequentially and repeatedly at predetermined intervals in the length direction of the optical fiber ribbon, and a length of each of the bonding portions and non-bonding portions that configure the bonding areas may be shorter than a length of the non-bonding area.

In addition, the bonding portion may be configured such that a plurality of bonding spots are disposed spaced apart at predetermined gaps or disposed in a mutually connected state.

Further, the bonding portion may have an elongation of 40 % to 160 %, a scant modulus of 10 MPa to 90 MPa at 2.5 % strain, and a viscosity of 200 mPa-s to 800 mPa-s at 25 °C.

Here, the bonding area may have a peak value of a vertical separation strength of between 2 gf and 20 gf.

In this case, each of the bonding areas may have an overall length of 10 millimeters (mm) to 20 millimeters (mm) and the non-bonding area may have a length of 30 millimeters (mm) to 70 millimeters (mm).

Further, each of the bonding areas may have an interval of 45 millimeters (mm) to 85 millimeters (mm).

In addition, the plurality of bonding portions and the one or more non-bonding portions configuring the bonding area may each have a length of 3 millimeters (mm) to 7 millimeters (mm).

Further, a ratio of a length of the bonding portion to a length of the non-bonding portion configuring each of the bonding areas may be 0.8 to 1.2.

Here, the bonding area may have an average value of a vertical separation strength of 1 gf to 10 gf.

In this case, the bonding area may have a peak value of a vertical separation strength of between 10 gf and 15 gf.

Further, an amount of work W required for separation of the bonding portion may be 0.1 mJ to 2.8 mJ.

In addition, a ratio of the peak value of the vertical separation strength of the bonding area to the average value of the vertical separation strength may be equal to or greater than 1.5.

Further, the optical fiber ribbon may be configured to include N optical fibers, in which a position of a bonding area in the length direction of the optical fiber that bonds a nth (where n is a natural number equal to or greater than 1) optical fiber and a (n+1)th optical fiber may be disposed at a center of positions of two consecutive bonding areas in the length direction that bonds the (n+1)th optical fiber and a (n+2)th (wherein n+2 is a natural number equal to or less than N) optical fiber.

Here, the bonding portion that configures the bonding area may either bond an upper portion and lower portion of the bonding portion while the pair of optical fibers to be bonded are in a circumscribed state, or bond a space between spaced-apart optical fibers when a pair of optical fibers are in a spaced-apart state.

Further, a horizontal separation strength required to separate the pair of optical fibers from each other in a direction parallel to the length direction of the optical fibers at each bonding area may be 300 gf or more.

In addition, to solve the aforementioned objects, there is provided an optical fiber ribbon, according to the present invention. The optical fiber ribbon may include a plurality of optical fibers bonded side by side, in which each adjacent pair of optical fibers among the plurality of optical fibers may be bonded through a plurality of bonding areas disposed spaced apart in a length direction of the optical fibers, the bonding areas may be disposed with a plurality of bonding spots being pre-interconnected, a non-bonding area disposed between the two adjacent bonding areas may be included, in the non-bonding area, a plurality of non-bonded sections, where all optical fibers are not bonded in a cross-section along the length direction of the optical fiber ribbon, may be provided spaced apart from each other in a length direction of the optical fiber ribbon, and a peak value of a vertical separation strength of the bonding area may be 2 gf to 20 gf.

In addition, the plurality of bonding areas may be each configured with a plurality of bonding portions spaced apart from each other and one or more non-bonding portions provided between the plurality of bonding portions.

Further, respective lengths of the bonding portion and the non-bonding portion that configure the bonding area may be shorter than a length of the non-bonding area.

In addition, the bonding area may have an elongation of 40 % to 160 %, a scant modulus of 10 MPa to 90 MPa at 2.5 % strain, and a viscosity of 200 mPa-s to 800 mPa-s at 25 °C.

Further, each of the bonding areas may have an overall length of 10 millimeters (mm) to 20 millimeters (mm) and the non-bonding area may have a length of 30 millimeters (mm) to 70 millimeters (mm).

In this case, each of the bonding areas may have an interval of 45 millimeters (mm) to 85 millimeters (mm).

In addition, the plurality of bonding portions and the one or more non-bonding portions configuring the bonding area may each have a length of 3 millimeters (mm) to 7 millimeters (mm).

Further, a ratio of a length of the bonding portion to a length of the non-bonding portion configuring each of the bonding areas may be 0.8 to 1.2.

In addition, the bonding area may have an average value of a vertical separation strength of 1 gf to 10 gf.

Here, the bonding area may have a peak value of a vertical separation strength of between 10 gf and 15gf.

Further, an amount of work W required for separation of the bonding portion may be 0.1 mJ to 2.8 mJ.

Here, a ratio of the peak value of the vertical separation strength of the bonding area to the average value of the vertical separation strength may be equal to or greater than 1.5.

Further, a horizontal separation strength required to separate the pair of optical fibers from each other in a direction parallel to the length direction of the optical fibers at each bonding area may be 300 gf or more.

### [Advantageous Effects]

According to the optical fiber ribbon of the present invention, a pair of adjacent optical fibers that configure the optical fiber ribbon are maintained in a mutually bonded state at a plurality of bonding areas. Additionally, the optical fiber ribbon can be rolled in the width direction, allowing for an increase in the number of optical fiber core wires accommodated within a high-density optical cable.

In addition, according to the optical fiber ribbon of the present invention, since the plurality of bonding areas are configured with a plurality of bonding portions spaced apart from each other and one or more non-bonding portions provided therebetween, the separation strength at each bonding area or the amount of work required to separate the bonding areas is reduced overall. This improves the workability of the separation tasks for the optical fibers that configure the optical fiber ribbon.

Further, according to the optical fiber ribbon of the present invention, by adjusting the length ranges of the plurality of bonding areas and the bonding portions and non-bonding portions that configure the bonding areas, the deviation in separation strength in the plurality of bonding areas is minimized, thereby minimizing the optical fiber damage during the separation process of the optical fibers.

### [Description of Drawings]

FIG. 1 illustrates a top plan view of an optical fiber ribbon according to the related art.
FIG. 2 illustrates a top plan view of an embodiment of the optical fiber ribbon according to the present invention.
FIG. 3 illustrates a top plan view of another embodiment of the optical fiber ribbon according to the present invention.
FIG. 4 illustrates a top plan view of yet another embodiment of the optical fiber ribbon according to the present invention.
FIG. 5 illustrates a cross-sectional view of an embodiment of the optical fiber ribbon according to the present invention.
FIG. 6 illustrates an enlarged cross-sectional view of an embodiment of the optical fiber ribbon according to the present invention.
FIG. 7 illustrates an enlarged cross-sectional view of another embodiment of the optical fiber ribbon according to the present invention.
FIG. 8 illustrates an enlarged cross-sectional view of yet another embodiment of the optical fiber ribbon according to the present invention.
FIG. 9 illustrates a separation strength measurement device for measuring the separation strength of the optical fiber ribbon according to the present invention.
FIG. 10 is a graph showing the separation strength measurement results of a conventional optical fiber ribbon.
FIG. 11 is a graph showing the separation strength measurement results of the optical fiber ribbon according to the present invention.

### [Mode for Disclosure]

Hereinafter, exemplary embodiments of the present invention will be described in detail with reference to the accompanying drawings. However, the present invention is not limited to the exemplary embodiments to be described below and may be specified as other aspects. On the contrary, the embodiments introduced herein are provided to make the disclosed content thorough and complete, and sufficiently transfer the spirit of the present invention to those skilled in the art. Like reference numerals indicate like constituent elements throughout the specification.

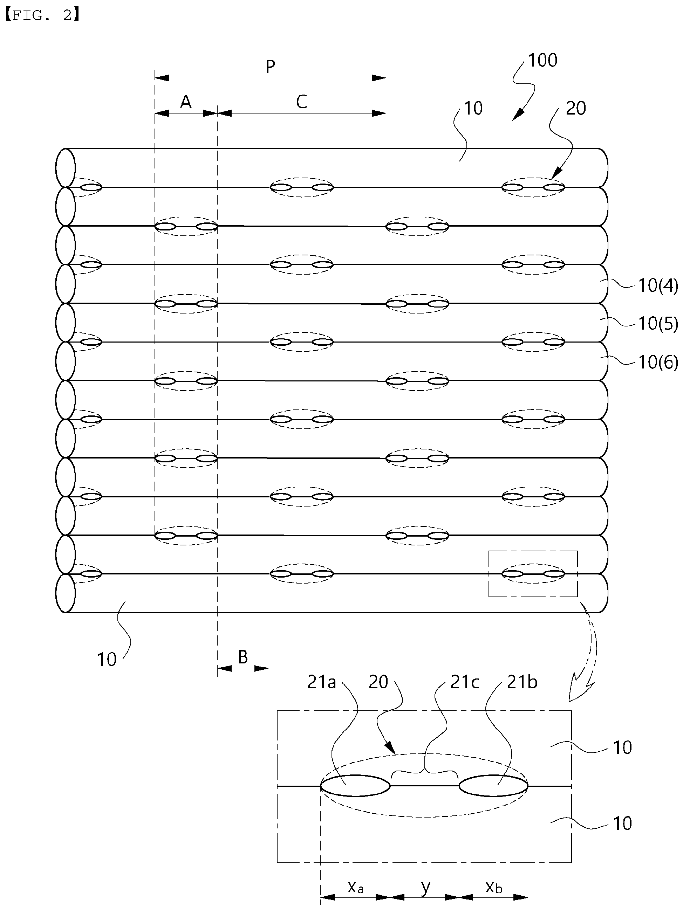

FIG. 2 illustrates a top plan view of an embodiment of the optical fiber ribbon according to the present invention.

As illustrated in FIG. 2, an optical fiber ribbon 100 according to the present invention is configured by bonding a plurality of optical fibers 10 side by side. Each adjacent pair of optical fibers 10 among the plurality of optical fibers 10 is bonded through a plurality of bonding areas 20 positioned spaced apart in the length direction of the optical fibers. The plurality of bonding areas 20 may be configured with a plurality of bonding portions 21a and 21b, which are spaced apart from each other, and one or more non-bonding portions 21c provided between the plurality of bonding portions 21a and 21b.

The optical fiber ribbon 100 according to the present invention may be provided with a plurality of non-bonding areas, where not all of the optical fibers 10 are bonded in the cross-section along the length direction of the optical fiber ribbon 100.

Further, the plurality of bonding portions 21a and 21b and the one or more non-bonding portions 21c that configure the plurality of bonding areas 20 are sequentially and repeatedly formed at predetermined intervals along the length direction of the optical fiber ribbon 100. The respective lengths of the plurality of bonding portions 21a and 21b, and the non-bonding portion 21c, may be configured to be shorter than the length of the non-bonding area.

Generally, the optical fiber ribbon 100 refers to an assembly configured in a strip form by sequentially bonding the plurality of optical fibers 10 side by side.

The optical fiber ribbon 100 may be configured by bonding a pair of optical fibers 10 disposed adjacent side by side along the length direction. In addition, the optical fiber ribbon 100 may be configured as a plurality of stacked ribbon stacks, making it suitable for batch connection and usable in the construction of large-capacity optical communication networks.

In the optical fiber ribbon 100 according to the present invention, an adjacent pair of optical fibers 10 among the plurality of optical fibers 10 is bonded through the plurality of bonding areas 20 spaced apart in the length direction of the optical fibers. Therefore, the optical fiber ribbon 100 maintains the plurality of optical fibers 10 in a mutually bonded state within the bonding areas 20 that are spaced apart from each other, while the remaining areas, excluding the bonding areas 20, maintain a non-bonded state. This allows the ribbon to be rolled in the width direction, enabling the optical fiber ribbon 100 to be efficiently accommodated within the internal space of an optical cable.

As described above, each optical fiber 10 configuring the optical fiber ribbon 100 needs to maintain a bonded state with sufficient bonding strength within the plurality of bonding areas 20. However, during the branching process at the connection area of the optical fiber ribbon, it is necessary for the pair of optical fibers 10 mutually bonded by the bonding area 20 to be easily separated in the process of separating each optical fiber from the optical fiber ribbon 100.

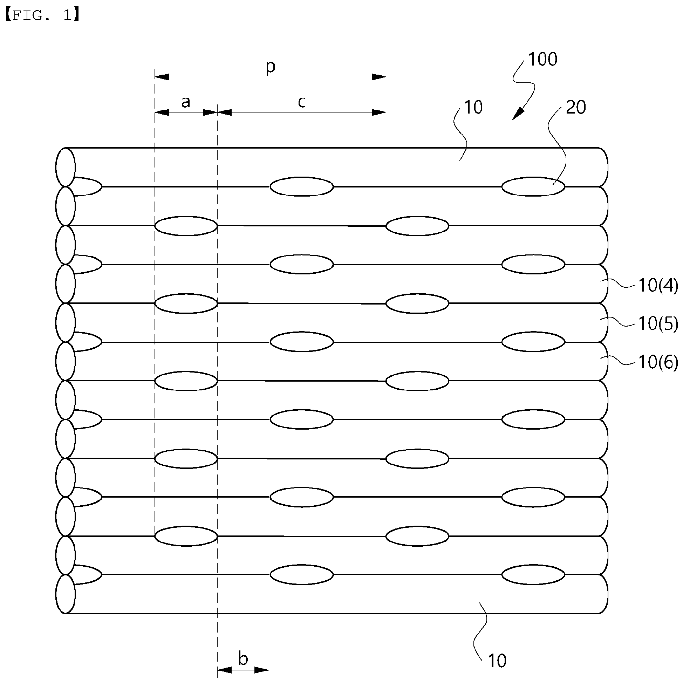

Meanwhile, with reference to FIG. 1, in the conventional optical fiber ribbon, it is common that adjacent pairs of optical fibers are bonded through a plurality of bonding portions spaced apart at predetermined gaps. However, in the conventional design, the bonding length of each bonding portion is long and continuously formed, which leads to an significant increase in the required separation strength or work amount to separate the bonding portions. This results in issues such as optical fiber damage occurring during the separation process or an increase in the difficulty of separating the optical fibers.

Therefore, in the present invention, instead of configuring each of the plurality of bonding areas as a single bonding portion as in the related art, each of the plurality of bonding areas 20 is configured with the plurality of bonding portions 21a and 21b that are spaced apart from each other, along with one or more non-bonding portions 21c provided between the bonding portions. This reduces the overall separation strength and work amount required to separate the optical fibers 10 in the optical fiber ribbon 100, while minimizing the deviation in separation strength between the plurality of bonding areas 20. As a result, the damage to the optical fibers 10 during the separation process is minimized.

The optical fiber ribbon 100 illustrated in FIG. 2 shows that each of the plurality of bonding areas 20 is provided with two bonding portions 21a and 21b spaced apart from each other, with one non-bonding portion 21c between the two bonding portions 21a and 21b. However, the bonding portion of the optical fiber ribbon 100 may be divided into three or more, and the non-bonding portions may be configured with two or more.

Here, the non-bonding portion 21c of the bonding area 20 refers to a part within each bonding area 20 that is not bonded by the plurality of bonding portions 21a and 21b along the length direction of the optical fiber 10.

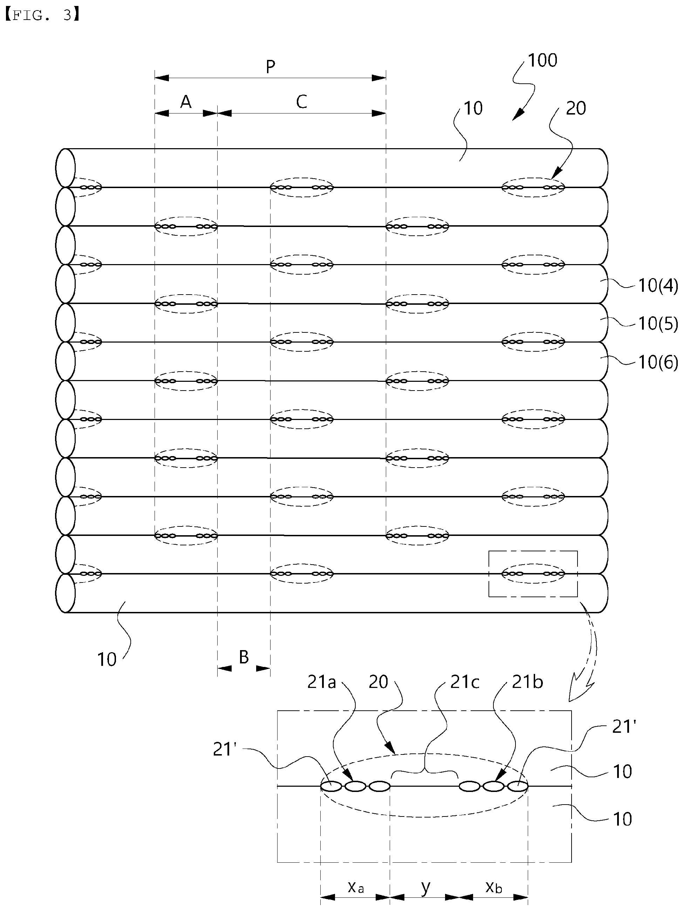

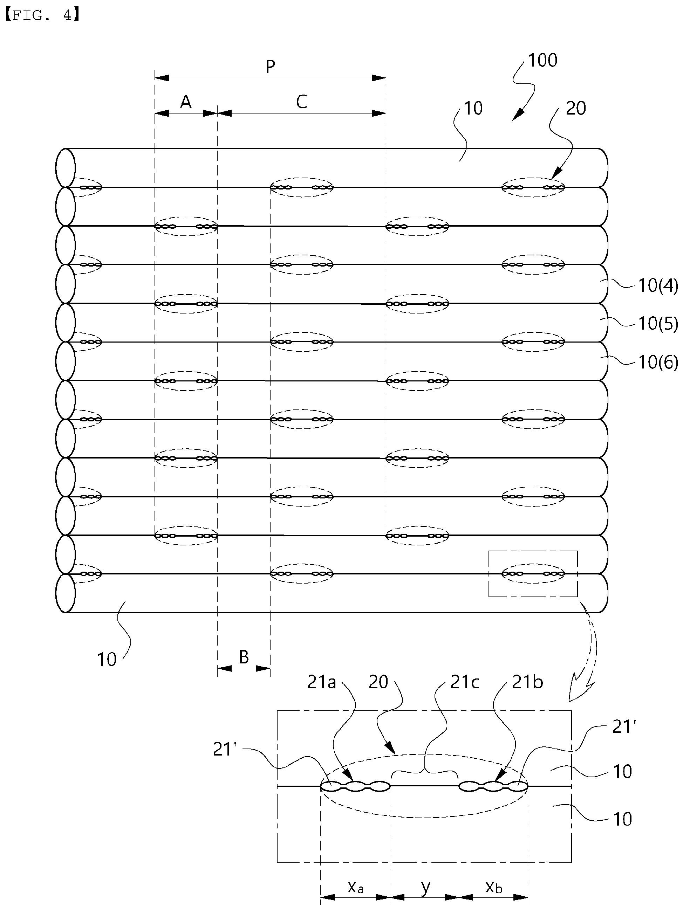

FIG. 3 illustrates a top plan view of another embodiment of the optical fiber ribbon according to the present invention, and FIG. 4 illustrates a top plan view of yet another embodiment of the optical fiber ribbon according to the present invention.

As illustrated in FIG. 3 and FIG. 4, the optical fiber ribbon 100 according to the present invention may be configured with a plurality of bonding portions 21a and 21b that configure each bonding area 20, not as an integral structure with a predetermined width along the length direction, but rather as a discontinuous or continuous plurality of bonding spots 21'.

In this manner, by configuring the bonding portions 21a and 21b as the plurality of bonding spots 21', the optical fiber ribbon 100 according to the present invention may reduce the amount of resin used to configure a single bonding portion, thereby improving flexibility and separation characteristics.

The optical fiber ribbon 100 illustrated in FIG. 3 is configured such that each bonding area 20 includes the plurality of bonding portions 21a and 21b, which are configured of the plurality of bonding spots 21'. The plurality of bonding spots 21' may be configured to be disposed spaced apart at predetermined gaps. In the embodiment illustrated in FIG. 3, the plurality of bonding portions 21a and 21b that configure each bonding area 20 are illustrated as being each configured of three bonding spots 21'. However, the number of bonding spots 21' may be increased or decreased.

The optical fiber ribbon 100 illustrated in FIG. 4 is configured such that the plurality of bonding portions 21a and 21b, which configure each bonding area 20, are configured of the plurality of bonding spots 21'**.** The plurality of bonding spots 21' may be connected integrally, without being separated or spaced apart, to configure each of the bonding portions 21a and 21b**.** As illustrated in FIG. 4, when the plurality of bonding spots 21' are interconnected to configure the bonding spots, it is possible to enhance the bonding strength of the optical fibers compared to the case where the plurality of bonding spots 21' are disposed spaced apart. This configuration may also minimize the deviation in separation strength within each of the bonding portions 21a and 21b, while similarly reducing the amount of resin used compared to the embodiment illustrated in FIG. 2.

Further, the present invention configures the optical fiber ribbon 100 by respectively adjusting the total length of each bonding area 20, as well as the lengths of the plurality of bonding portions 21a and 21b and the one or more non-bonding portions 21c that configure each bonding area. As a result of measuring the separation strength in the plurality of bonding areas 20 of the optical fiber ribbon 100, it was confirmed that the optical fiber ribbon 100 according to the present invention has a reduced overall magnitude and deviation in separation strength in each of the plurality of bonding areas 20 compared to conventional optical fiber ribbons, thereby improving workability and reducing the potential for optical fiber damage. The specific test results will be provided below.

Further, in order to secure the flexibility to enable widthwise rolling, the optical fiber ribbon 100 according to the present invention does not form the bonding area 20, which mutually bonds adjacent pairs of optical fibers 10, across the entire boundary area of the adjacent optical fibers 10. Instead, the bonding area 20 for bonding the adjacent pair of optical fibers 10 is configured discontinuously within the boundary area of the pair of optical fibers 10.

In the optical fiber ribbon 100 according to the present invention, a length A of each bonding area 20 may range from 10 millimeters (mm) to 20 millimeters (mm). Here, the length A of each bonding area 20 refers to a distance between both ends of the plurality of bonding portions 21a and 21b that configure each bonding area 20.

In addition, a length C of each non-bonding area, which is disposed in the boundary area of adjacent pairs of optical fibers 10 in the length direction of the optical fiber ribbon 100 and does not include the bonding area 20, may range from 30 millimeters (mm) to 70 millimeters (mm). Further, an interval P between the bonding areas 20 may range from 45 millimeters (mm) to 85 millimeters (mm).

That is, the optical fiber ribbon 100 does not bond the entire adjacent pair of optical fibers 10 along the length direction. Instead, it forms the plurality of bonding areas 20, each with the length A ranging from 10 millimeters (mm) to 20 millimeters (mm), at intervals P ranging from 45 millimeters (mm) to 85 millimeters (mm). The length C of each non-bonding area is set to range from 30 millimeters (mm) to 70 millimeters (mm). This configuration ensures that the optical fiber ribbon 100 has sufficient flexibility to enable widthwise rolling, while preventing issues such as separation and damage of the individual optical fibers 10 during the rolling process.

Among these length constraints, when the length A of the bonding area 20 in the length direction of the optical fiber 10 is made smaller than the above range, and accordingly, the interval P between bonding areas 20 and the length C of the non-bonding area become larger than the above range, rolling may still be possible. However, there is a risk that the bonding portion 21 configuring the bonding area 20 may be damaged, leading to the separation and damage of the optical fibers 10. Meanwhile, when the length A of the bonding area 20 is made larger than the above range, and accordingly, the interval P between bonding areas 20 and the length C of the non-bonding portion become smaller than the above range, widthwise rolling becomes difficult. This may lead to optical fiber 10 breakage during the rolling process or make it challenging to branch specific optical fibers 10.

Moreover, a length B of the section where not all optical fibers in the width direction of the optical fiber ribbon 100 are bonded by the bonding area 20 (hereinafter referred to as the 'non-bonding section') is preferably configured to be approximately 10 millimeters (mm) to 30 millimeters (mm), as this range is advantageous for securing the flexibility required for widthwise rolling.

In addition, each bonding area 20 that configures the optical fiber ribbon 100 according to the present invention is configured with the plurality of bonding portions 21a and 21b, along with one or more non-bonding portions 21c between the plurality of bonding portions 21a and 21b. As a result, during the process of separating any one optical fiber 10 from the optical fiber ribbon 100, the separation strength and the amount of work required for separation in each bonding area 20, which bonds the adjacent optical fibers 10, may be relatively reduced.

Specifically, the optical fiber ribbon 100 according to the present invention may have an average value of the vertical separation strength measured at each bonding area 20 ranging from 1 gf to 10 gf. Additionally, a peak value of the vertical separation strength of the bonding portions 21a and 21b measured at each bonding area 20 may range from 2 gf to 20 gf. An embodiment of the separation strength measurement for such an optical fiber ribbon 100 will be provided below.

In the optical fiber ribbon 100 illustrated in FIG. 1 to FIG. 4, each bonding area 20 may be configured with two bonding portions 21a and 21b spaced apart from each other, along with one non-bonding portion 21c therebetween. Here, a length xₐ of a first bonding portion 21a, a length x_{b} of a second bonding portion 21b, which configure two bonding portions, and a length y of the non-bonding portion in the length direction of the optical fiber 10 may each range from 3 millimeters (mm) to 7 millimeters (mm).

Preferably, ratios between the length xₐ of the first bonding portion 21a, the length x_{b} of the second bonding portion 21b, and the length y of the non-bonding portion in the length direction of the optical fiber 10 may each range from 0.8 to 1.2.

That is, in the embodiment illustrated in FIG. 2, when a ratio of the length of the first bonding portion to the length of the second bonding portion (xₐ/x_{b}), a ratio of the length of the first bonding portion to the length of the non-bonding portion (xₐ/y), and a ratio of the length of the second bonding portion to the length of the non-bonding portion (x_{b}/y) are each in the range of 0.8 to 1.2, an appropriate bonding strength between the plurality of optical fibers 10 that configure the optical fiber ribbon 100 may be maintained.

Experimentally, when the lengths of the bonding portion and the non-bonding portion within a single bonding area were not configured to correspond to the above range, and the length of the bonding portion was relatively larger than the length of the non-bonding portion, it was found that while the optical fibers maintained a stable bonded state in the rolling condition of the optical fiber ribbon, the peak value of the separation strength in the bonding portion increased during the process of separating the optical fibers from the ribbon. Additionally, the area where stress was applied to the optical fiber became longer, leading to damage in some areas of the optical fiber. Conversely, when the length of the bonding portion was configured to be smaller than the length of the non-bonding portion, it was observed that the separation strength was not high during the process of separating the optical fibers, which improved workability. However, there were areas where the bonding portions separated in the widthwise rolling state of the optical fiber ribbon.

Therefore, it is preferable that the length xₐ of the first bonding portion 21a, the length x_{b} of the second bonding portion 21b, and the length y of the non-bonding portion in the length direction of the optical fiber 10 are configured to be within the above range, either the same or approximately corresponding lengths. Accordingly, this configuration has the effect of minimizing the separation of optical fibers 10 during the rolling of the optical fiber ribbon 100 and also reducing the damage to the optical fibers due to the increase in separation strength when separating the optical fibers 10 from the optical fiber ribbon 100.

When the optical fiber ribbon 100 is configured with N optical fibers 10, a position of the bonding area 20 in the length direction of the optical fibers 10 that bonds the nth (where n is a natural number greater than or equal to 1) optical fiber 10 and the (n+1)th optical fiber 10 is disposed at a center of the positions of the two consecutive bonding areas 20 in the length direction of the optical fibers 10 that bond the (n+1)th optical fiber 10 and the (n+2)th (where n+2 is a natural number less than or equal to N) optical fiber 10. This configuration allows the length B of the non-bonding section of the optical fiber ribbon 100 to be configured at predetermined gaps, thereby enabling the optical fiber ribbon 100 to achieve uniform widthwise flexibility in the length direction.

The optical fiber ribbon 100 in the embodiments illustrated in FIG. 2 to FIG. 5 is configured with 12 optical fibers. For example, the positions of the separated plurality of bonding areas 20 for bonding the nth (n=4) (i.e., 4th) optical fiber 10(4) and the (n+1)th (i.e., 5th) optical fiber 10(5) are disposed at the central portions of the separated plurality of bonding areas 20 for bonding the (n+1)th (i.e., 5th) optical fiber 10(5) and the (n+2)th (i.e., 6th) optical fiber 10(6). This configuration allows the length B of the non-bonding section of the optical fiber ribbon 100 to be disposed with uniform gap along the length direction of the optical fiber ribbon 100.

Therefore, the optical fiber ribbon 100 according to the present invention ensures that the adjacent pair of optical fibers 10 are maintained in a mutual bonded state with appropriate bonding strength through each bonding area 20, allowing for widthwise rolling. At the same time, when separating the adjacent pair of optical fibers 10, the separation strength in each bonding area 20 is appropriately controlled, making the separation process of the optical fiber ribbon easier to perform.

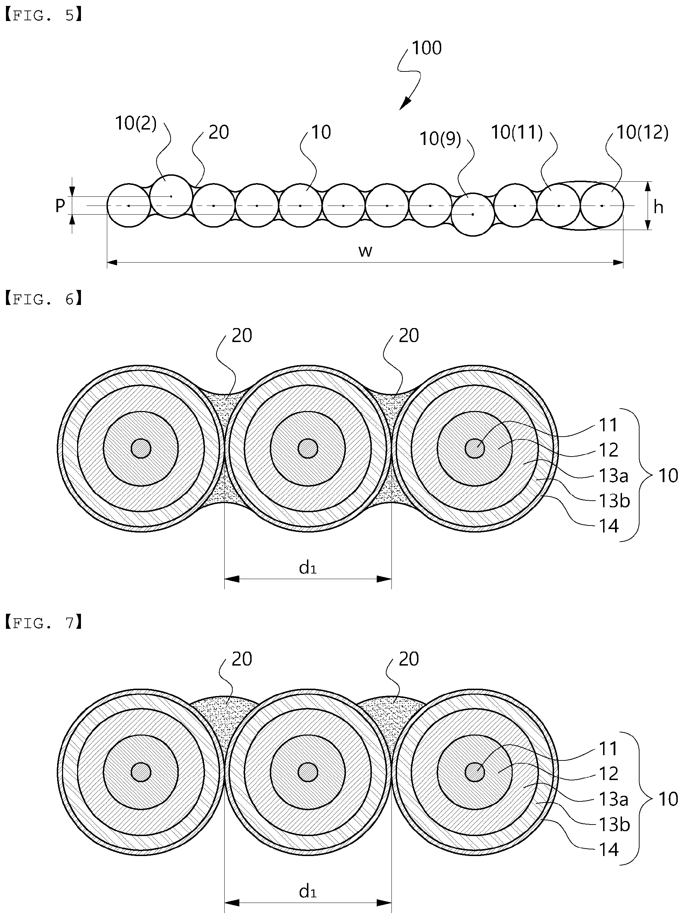

FIG. 5 illustrates a cross-sectional view of an embodiment of the optical fiber ribbon according to the present invention.

With reference to FIG. 5, the optical fibers 10 that configure the optical fiber ribbon 100 may be small-diameter optical fibers 10 with a diameter of 180 µm to 220 µm, or standard optical fibers 10 with a diameter of 230 µm to 270 µm. When 12 optical fibers 10 are bonded to configure the optical fiber ribbon 100, a width w of the optical fiber ribbon 100 may be configured to be 3.22 mm or less, based on the restrictions of the IEC standard or ANSI/ICEA standard related to optical cables.

Further, while it is ideal for the centers of the plurality of optical fibers 10 in the optical fiber ribbon 100 to be disposed along the same axis as illustrated in the cross-section in FIG. 5, errors may occur during the bonding process. Even if such errors occur, it is desirable to minimize the height deviation between the centers of adjacent optical fibers 10 that configure the optical fiber ribbon 100 in order to provide optimal rolling performance.

In the embodiment illustrated in FIG. 5, a 2nd optical fiber 10(2) and a 9th optical fiber 10(9) of the 12 optical fibers 10 that configure the optical fiber ribbon 100 are each bonded either higher or lower than a reference height. However, a height difference p between the centers of the 2nd optical fiber 10(2) and the 9th optical fiber 10(9) needs to be no more than 75 µm, which is smaller than the radius of each optical fiber 10, based on the IEC or ANSI/ICEA standards related to optical cables.

Further, with reference to FIG. 2 to FIG. 5, the plurality of bonding portions 21a and 21b that configure each bonding area 20 may be cured into a curved shape in the inward direction when an appropriate amount of resin is used. However, when the amount of resin is not properly adjusted and excessive resin is injected, as in the case of the bonding area 20 bonding a 11th optical fiber 10(11) and a 12th optical fiber 10(12) in FIG. 5, it may be cured into a curved shape in the outward direction.

Meanwhile, even if the plurality of bonding portions 21a and 21b that configure the bonding area 20 protrude outward from the optical fiber 10 as described above, a maximum thickness h of the plurality of bonding portion 21a and 21b that configure each bonding area 20 needs to be preferably configured to be 360 µm or less, based on the restrictions followed by the IEC standard or ANSI/ICEA standard related to optical cables.

Further, the plurality of bonding portions 21a and 21b that configure each bonding area 20 may be configured by UV-curing resin, laser-sintered powder, or various other resins or polymers that are cured by UV light or laser sintering. The amount of resin or polymer forming the plurality of bonding portions 21a and 21b that configure each bonding area 20 may be configured to be almost identical.

The plurality of bonding portions 21a and 21b that configure each bonding area 20 may have an elongation of the cured or sintered resin of 40% to 160%, and preferably 50% to 80%, in order to allow the optical fiber ribbon 100 to be rolled while ensuring that the bonding areas may be clearly separated when the bonded optical fibers are separated.

Additionally, in order to enable widthwise rolling or maintain the rolled state of the optical fiber ribbon 100, the secant modulus of the plurality of bonding portions 21a and 21b that configure each bonding area 20 may be 10 MPa to 90 MPa at a 2.5 % strain, and preferably 25 MPa to 45 MPa.

To form the plurality of bonding areas 20 spaced apart in the length direction of the optical fiber 10 as described above, the resin or similar material needs to be applied accurately and quickly, and also have appropriate flowablility characteristics to prevent it from dropping before curing or sintering in order to form the plurality of bonding areas 21a and 21b that configure each bonding area 20 into the desired structure. The viscosity of the plurality of bonding portions 21a and 21b that configure each bonding area 20 may be 1,000 mPa·s to 4,000 mPa·s when applying using the roller coating method, a typical coating method at 25 °C. Preferably, the viscosity may be 1,600 mPa·s to 3,200 mPa·s. In case of a dispenser coating method that uses a dispenser for more precise application, the viscosity may range from 200 mPa·s to 800 mPa·s, and preferably 300 mPa·s to 600 mPa·s.

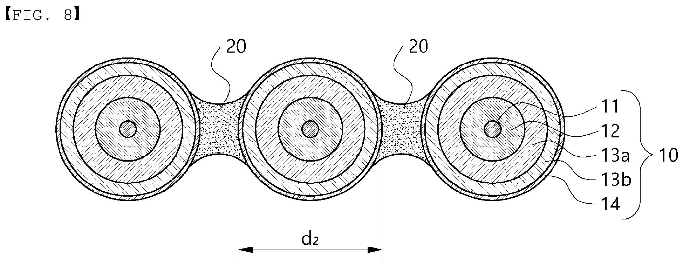

FIG. 6 illustrates an enlarged cross-sectional view of an embodiment of the optical fiber ribbon according to the present invention, FIG. 7 illustrates an enlarged cross-sectional view of another embodiment of the optical fiber ribbon according to the present invention, and FIG. 8 illustrates an enlarged cross-sectional view of yet another embodiment of the optical fiber ribbon according to the present invention.

Specifically, the embodiments illustrated in FIG. 6 and FIG. 7 represent cases where the optical fibers 10 that configure the optical fiber ribbon 100 have a diameter d1 of 230 µm to 270 µm, which corresponds to standard optical fibers 10. The embodiment illustrated in FIG. 8 represents a case where the optical fibers 10 that configure the optical fiber ribbon 100 have a diameter d2 of 180 µm to 220 µm, which corresponds to small-diameter optical fibers 10.

The plurality of optical fibers 10 that configure the optical fiber ribbon 100 may each be configured to include a core 11, a cladding layer 12, coating layers 13a and 13b, and a coloring layer 16.

The core 11 may be configured from glass or synthetic resin materials and is responsible for transmitting light.

The cladding layer 12 may be formed to surround the core 11. The cladding layer 12 is made of silica-based glass or synthetic resin with a refractive index lower than that of the core 11. This configuration ensures that the light passing through the central portion of the optical fiber 10 undergoes total internal reflection, allowing it to effectively transmit signals.

The coating layers 13a and 13b may be formed by coating the surface of the cladding layer 12 with a material that includes at least one of acrylate, polyimide, or carbon.

The coating layers 13a and 13b may include a first coating layer 13a and a second coating layer 13b. The first coating layer 13a, which directly surrounds the cladding layer 12, may use a material with a relatively low modulus to absorb external impacts transmitted to the cladding. The second coating layer 13b may use a material with a relatively high modulus to provide further protection against external impacts. In addition to the first coating layer 13a and the second coating layer 13b, the coating layers may be provided with an additional coating layer to protect the core 11 and the cladding layer 12.

The coloring layer 14 has a coating material containing colored or colorless pigments that is applied to the surface of the coating layers 13a and 13b, and serves to impart color to the optical fiber 10, allowing the optical fibers to be identified through color differentiation from other optical fibers.

The coloring layer 14 may be formed using a color coating method, where coloring pigment particles and a resin containing a certain concentration of oxygen are applied to the surface of the optical fiber 10 and then cured, in order to impart color to the optical fiber 10.

In an embodiment of the present invention, an outer diameter of the optical fiber 10 in the optical fiber ribbon 100, excluding the coating layer 13 and the coloring layer 14, may generally be 125 ± 1 micrometer (µm). A thickness of the coating layer 13 or the coloring layer 14 may be determined depending on the intended purpose.

Therefore, in an embodiment of the present invention, an overall outer diameter of the optical fiber 10 in the optical fiber ribbon 100 may be formed with a value obtained by adding the thickness of the coating layer 13 and the coloring layer 14 to the outer diameter of the cladding layer 12. The total outer diameter of the optical fiber 10 may be in the range of 250 ± 1 micrometer (µm).

The optical fiber ribbon 100 illustrated in FIG. 6 and FIG. 7 is configured with 12 standard optical fibers 10 bonded together to satisfy the width w limit of the 12-core optical fiber ribbon 100, which needs to comply with the IEC or ANSI/ICEA standards related to optical fiber ribbons or optical cables, specifically the 3.22 mm (3,220 µm) specification. To achieve this, the optical fiber ribbon 100 is configured such that most of the adjacent optical fibers 10 are bonded in a mutually circumscribed state.

That is, since the sum of the diameters d1 of the 12 optical fibers 10, each with a diameter of 250 µm, is 3,000 µm, even if some optical fibers 10 are spaced apart (as illustrated in FIG. 8), most of the optical fibers 10 will be bonded in a mutually circumscribed state, forming bonding areas 20. The optical fibers 10 may then be bonded to each other by a pair of bonding portions 21a and 21b that configure each bonding area 20.

The embodiment illustrated in FIG. 6 is an example where resin for forming the bonding portions 21 is applied to both sides of the optical fiber ribbon 100, which includes mutually circumscribed optical fibers 10, thereby forming the bonding areas 20.

The embodiment illustrated in FIG. 7 is an example where resin for forming the bonding portions 21 is applied only to the top of the optical fiber ribbon 100, which includes mutually circumscribed optical fibers 10, thereby forming the bonding areas 20.

Instead of applying resin to both sides of the optical fiber ribbon 100 to form the bonding areas 20, as illustrated in FIG. 7, when resin is applied only to one area of both sides of the optical fiber ribbon 100, for example, only the upper portion of upper and lower portions of the optical fiber ribbon, the bonding areas 20 may still be formed. In this case, not only can the unidirectional rolling characteristics of the optical fiber ribbon 100 be sufficiently realized during rolling, but the overall resin usage can be effectively reduced as well.

In this case, even though the bonding areas 20 are formed only on one side of the optical fiber ribbon 100, to ensure sufficient bonding strength between the optical fibers 10 via the bonding portions 21, the amount of resin applied per unit area of the resin configuring the bonding portions 21 may be increased compared to the embodiment illustrated in FIG. 6. As a result, as illustrated in FIG. 7, each bonding portion 21 that configures the bonding area 20 may have a convex shape overall after the resin is cured.

The optical fiber ribbon 100 illustrated in FIG. 8 is configured with 12 small-diameter optical fibers 10 bonded together, and the sum of the diameters d2 of each optical fiber 10 is only up to 2,640 µm. This provides some margin within the width limit of the 12-core optical fiber ribbon 100, which is 3.22 mm (3,220 µm).

When configuring the optical fiber ribbon 100 by bonding the optical fibers 10 discontinuously, as illustrated in FIG. 8, bonding the optical fibers 10 with a gap therebetween and filling the space with resin to form the bonding area 20 may provide better bonding performance than bonding the optical fibers 10 in a mutually circumscribed state.

That is, when the optical fiber ribbon 100 is configured with 12 small-diameter optical fibers 10 bonded together, most of the optical fibers 10 are spaced apart, and the bonding areas 20 are formed therebetween. These bonding areas 20 may then be bonded by the pair of bonding portions 21a and 21b that configure each bonding area 20.

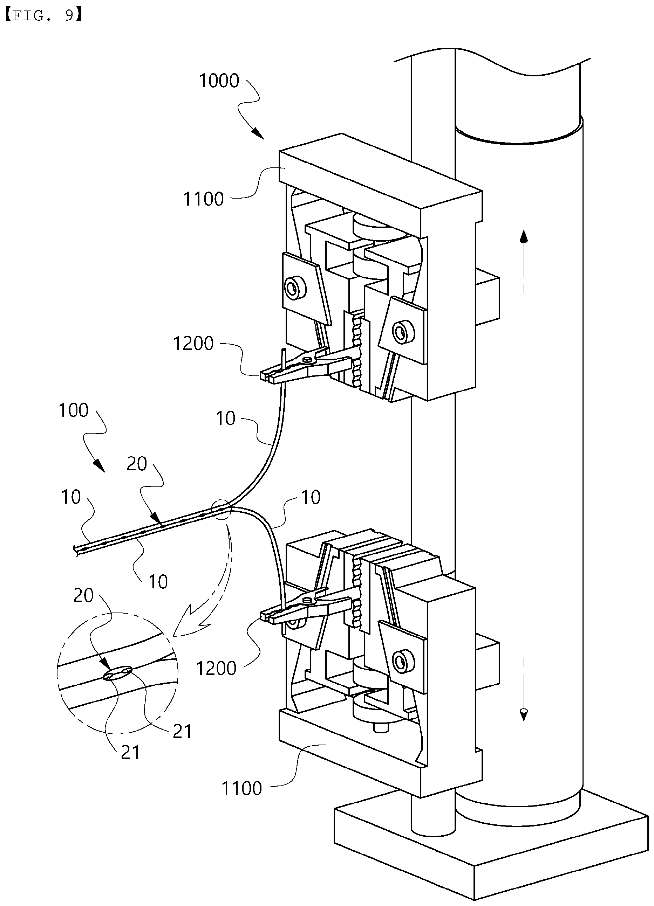

FIG. 9 illustrates a separation strength measurement device for measuring the vertical separation strength of the optical fiber ribbon according to the present invention.

As illustrated in FIG. 9, to measure the vertical separation strength of the optical fiber ribbon 100 according to the present invention, after branching the ends of the pair of optical fibers 10 bonded by the bonding area 20 at a position spaced apart in the length direction of the optical fiber ribbon 100, the ends of the branched pair of optical fibers are fixed to each grip part 1200 provided on a pair of mounts 1100, which are movable in an opposite direction of an measurement device 1000, at a position 10 cm away from the bonding area 20. Then, each optical fiber of the pair of optical fiber 10 fixed to the pair of grip parts 1200 is pulled in the opposite direction (a direction perpendicular to the length direction of the optical fiber) at a speed of approximately 500 mm/min. The strength is measured during the process of separating the pair of optical fibers 10 in the vertical direction.

Specifically, the separation strength measurement device 1000 measured the magnitude of the force required to separate the optical fibers during the process of the pair of optical fibers 10, which configure the optical fiber ribbon, being split and separated from the bonded optical fiber in the vertical direction, using a sensor such as a load cell to measure the separation strength.

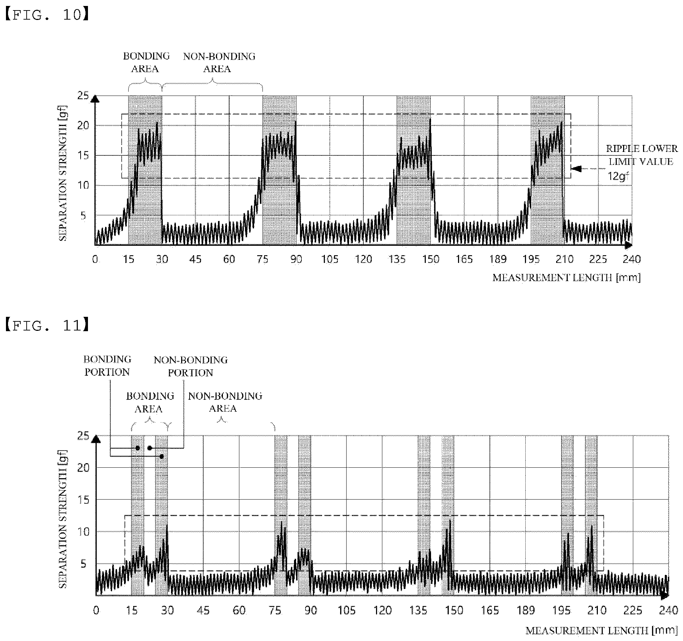

FIG. 10 is a graph showing the separation strength measurement results of the conventional optical fiber ribbon illustrated in FIG. 1, using the separation strength measurement device 1000 illustrated in FIG. 9, and FIG. 11 is a graph showing the separation strength measurement results of the optical fiber ribbon according to the present invention, as illustrated in FIG. 2, using the separation strength measurement device 1000 illustrated in FIG. 9.

As illustrated in FIG. 1, each adjacent pair of optical fibers among the plurality of optical fibers in the conventional optical fiber ribbon are bonded through a plurality of bonding areas formed spaced apart in plural. However, the bonding areas in the conventional optical fiber ribbon differ from the bonding area 20 in the present invention in that the bonding area is not configured with a pair of spaced bonding portions and a non-bonding portion, nor is it formed by a plurality of bonding spots interconnected. Instead, the entire single bonding area in the conventional optical fiber ribbon is configured long and uniformly without separation.

The conventional optical fiber ribbon (see FIG. 1), for which the separation strength is measured using the separation strength measurement device 1000, applies an optical fiber ribbon where the length of each bonding area is 15 millimeters (mm) and the interval between the plurality of bonding areas is 60 millimeters (mm).

FIG. 11 is a graph showing the separation strength measurement results of the optical fiber ribbon 100 according to the present invention. The optical fiber ribbon 100 is similarly configured with each bonding area 20 having a length A of 15 millimeters (mm). However, the lengths xₐ and x_{b} of the pair of spaced bonding portions 21 and the length y of the non-bonding portion between the pair of spaced bonding portions 21 are configured to be 5 millimeters (mm) each (see FIG. 2). Further, the interval P between the plurality of bonding areas 20 is configured to be 60 millimeters (mm), which is the same as the optical fiber ribbon in FIG. 9.

In the graphs illustrated in FIG. 10 and FIG. 11, the horizontal axis represents the separation strength measurement length (mm), which refers to twice the length of a single optical fiber 10 that has been separated using the separation strength measurement device 1000. Therefore, in the illustrated graphs, the measurement length (mm) at each bonding area 20 is illustrated to be approximately 30 millimeters (mm). However, this means that the sum of the lengths A of the bonding areas 20 for each separated pair of optical fibers 10 is approximately 30 millimeters (mm). In the actual optical fiber ribbon 100, the length A of each bonding area 20 is understood to be approximately 15 millimeters (mm). The same applies to the description of the measurement length of the non-bonding area.

The bonding area 20 of the optical fiber ribbon 100 is a portion where each adjacent pair of optical fibers 10 is bonded with resin or similar materials, so the separation strength is measured in a pulse shape. In the non-bonding area, the separation strength is observed to have a reference value close to 0 gf.

Using the separation strength measurement device 1000, the separation strength measurement method described above involves continuously separating four or more bonding areas 20 of a pair of optical fibers. A maximum value of the separation strength measured within each bonding area is defined as a peak value of the vertical separation strength, and an median value between the maximum and minimum values of the vertical separation strength is defined as an average value of the vertical separation strength.

According to the test results of the optical fiber ribbon of the present invention illustrated in FIG. 11, it was confirmed that the average value of the vertical separation strength measured at each bonding area 20 in the optical fiber ribbon 100 ranges from 1 gf to 10 gf.

Additionally, it can be confirmed that the peak value of the vertical separation strength at the bonding portion of each bonding area in the optical fiber ribbon 100 of the present invention ranges from 2.0 gf to 20 gf.

In contrast, according to the test results of the conventional optical fiber ribbon illustrated in FIG. 10, the average value of the vertical separation strength measured at each bonding area 20 was found to exceed 10 gf. In addition, according to the test results of the conventional optical fiber ribbon illustrated in FIG. 10, the average value of the vertical separation strength measured at the bonding area was 15 gf or more, and the peak value of the vertical separation strength was 20 gf or higher. In contrast, according to the test results of the optical fiber ribbon 100 of the present invention illustrated in FIG. 11, the average value of the vertical separation strength measured at the bonding area 20 was 8 gf or less, and the peak value of the vertical separation strength was measured to be 13 gf or less. It was also observed that, due to the presence of non-bonding portions in each bonding area, the separation strength follows a pattern of increasing, decreasing, and then increasing again. Further, as a result of repeatedly measuring the average value of the vertical separation strength of multiple bonding areas 20 using the same method, it was confirmed that the average value of the vertical separation strength of each bonding area 20 has a value lower than approximately 10 gf.

The optical fiber ribbon 100 according to the present invention is configured with the plurality of bonding areas 20, each consisting of the plurality of spaced bonding portions 21a and 21b, and the non-bonding portion 21c disposed between the pair of bonding portions. As a result, it can be confirmed that the separation strength measured at the plurality of bonding areas 20 is reduced by approximately 20 % or more compared to the separation strength at each optical fiber bonding portion in the conventional optical fiber ribbon.

Further, the area under the separation length and separation strength graph illustrated in FIG. 10 and FIG. 11 can be considered eventually proportional to the amount of work W required by the operator during the optical fiber separation process.

The amount of work W required for each bonding area 20 may be defined as the average of the sum of the vertical separation strengths measured at each section during the continuous separation of four or more bonding areas 20 of the pair of optical fibers 10, using the separation strength measurement device 1000 according to the previously described separation strength measurement method. This average value may be defined as the amount of work (or the energy or impact transferred to the optical fiber by the separation task during the separation process) .

It was confirmed that the amount of work W required for the bonding area of the conventional optical fiber ribbon, as illustrated in FIG. 10, is approximately 4.4 mJ, while the amount of work W required for the bonding area 20 of the optical fiber ribbon according to the present invention, as illustrated in FIG. 11, is approximately 1.6 mJ.

As a result of evaluating multiple samples using the same method as the optical fiber ribbon test, it was confirmed that the amount of work W required for the separation of each bonding area of the conventional optical fiber ribbon ranges from 2.9 mJ to 5.9 mJ. In contrast, it was confirmed that the optical fiber ribbon 100 of the present invention requires an amount of work W for the separation of each bonding area 20 ranging from 0.1 mJ to 2.8 mJ.

According to the test results of the conventional optical fiber ribbon illustrated in FIG. 10, it can be confirmed that the magnitude of the separation strength measured at the bonding area due to the bonding portion is significantly larger compared to the optical fiber ribbon of the present invention. Additionally, as the length of the bonding area where the separation strength is effectively applied becomes relatively longer, the amount of work W increases. As a result, the amount of work required for the separation of each bonding area is confirmed to be 2.9 mJ or more.

Therefore, as illustrated in FIG. 10, the conventional optical fiber ribbon has a larger magnitude of separation strength itself required at the bonding area, and the separation strength is generally high across the entire bonding area or the length of the bond area where separation strength is applied is maintained at a relatively short value. As a result, both the magnitude of the force and the amount of work required for the separation task are larger. In contrast, for the optical fiber ribbon of the present invention illustrated in FIG. 11, the separation strength itself is lower and varies within the bonding area. The actual length of the bonding area where separation strength is applied is relatively shorter, confirming a reduction in the amount of work required for the separation task or the fatigue associated with the task.

Additionally, when the peak value of the vertical separation strength is larger compared to the average value of the vertical separation strength at the bonding area, the bonding strength of the bonding area may be maintained while reducing the amount of work W required for separation. In this case, a ratio of the peak value of the vertical separation strength to the average value of the vertical separation strength measured at the bonding area of 1.5 or more is expected to provide desirable effects.

Further, since the deviation between the peak value and the average value of the vertical separation strength measured at multiple bonding areas is small, it can be confirmed that the optical fiber ribbon 100 according to the present invention has no issues with bonding quality deviation at each bonding area 20.

That is, even when a bonding area is configured with a plurality of separated bonding portions, the deviation in separation strength is not significantly larger compared to when configured with a single bonding portion. As a result, the bonding quality for each bonding area is consistently maintained.

It was confirmed that the deviation in the separation strength of the conventional optical fiber ribbon illustrated in FIG. 10 is approximately 7 gf, while the deviation in the separation strength of the optical fiber ribbon according to the present invention illustrated in FIG. 11 is approximately 5 gf. Additionally, as a result of evaluating multiple samples using the same method, it was confirmed that the deviation in the separation strength improved by 20 % or more.

Further, through the test results illustrated in FIG. 11, it can be inferred that when the peak value of the vertical separation strength at each bonding area has a value of 10 gf to 15 gf, the optical fiber ribbon may provide an appropriate bonding strength, ensuring that no separation phenomenon occurs between the optical fibers even when the ribbon is rolled, and that the optical fibers do not get damaged during separation.

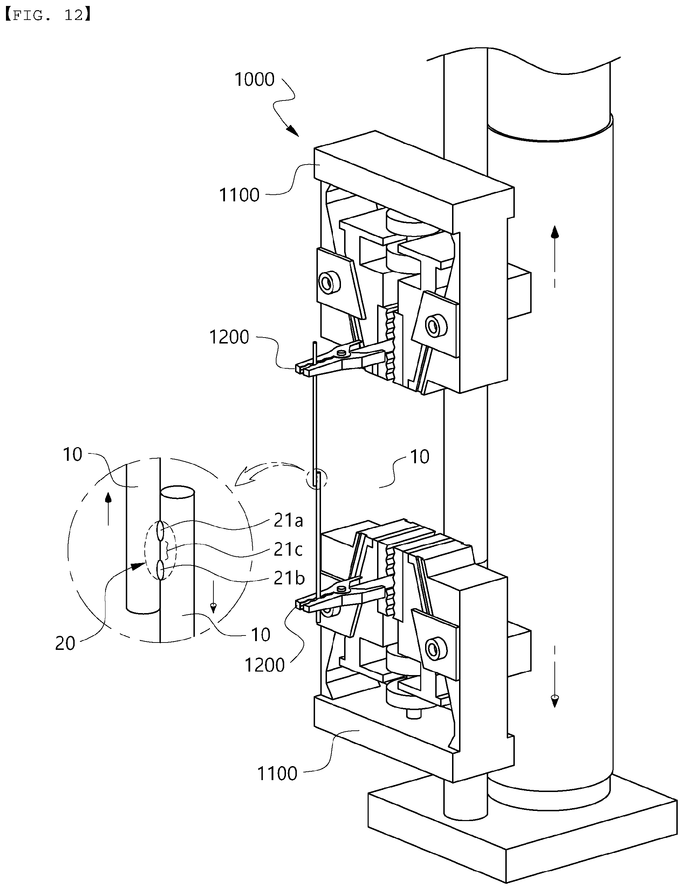

FIG. 12 illustrates a separation strength measurement device for measuring the horizontal separation strength in the length direction of the optical fibers of the bonding area of the optical fiber ribbon according to the present invention.

FIG. 12 shows the process of measuring the horizontal separation strength in the length direction of the optical fiber ribbon 100 according to the present invention, at each of the plurality of bonding areas 20, in a direction parallel to the length direction of the optical fibers.

For measuring the horizontal separation strength, the pair of optical fibers 10 mutually bonded through one bonding area 20 among the plurality of optical fibers 10 that configure the optical fiber ribbon 100 is separated from the optical fiber ribbon 100. Then, with one bonding area 20 interposed therebetween, the unnecessary core wire areas of the optical fibers are cut and removed as illustrated in the enlarged view of FIG. 12.

Next, the both ends of the pair of optical fibers 10, which are away from the bonding area 20 by a length of 10 cm, are fixed to each grip part 1200 provided on the separation strength measurement device 1000. Then, during the process of pulling the pair of optical fibers 10 fixed to the pair of grip parts 1200 at a speed of approximately 500 mm/min in the horizontal direction parallel to the optical fiber length, the one bonding area 20 is broken, and the strength is measured until the pair of optical fibers 10 are completely separated from each other.

In the present invention, the horizontal separation strength of the optical fiber ribbon 100 is the average value of the peak values of the separation strength measured in four samples, each including one bonding area 20 of the optical fiber ribbon 100. Each sample is taken from the same pair of optical fibers 10 within a 2-meter length direction of the optical fiber ribbon 100.

The separation strength measurement device 1000 for measuring the horizontal separation strength, illustrated in FIG. 12, is illustrated as being identical to the separation strength measurement device illustrated in FIG. 9. However, this is not limited thereto, and various shapes of equipment that can fix and pull the ends of the pair of optical fibers 10 in a direction parallel to the optical fiber length may be used.

It was confirmed that when the horizontal separation strength required to separate the pair of optical fibers in the direction parallel to the optical fiber length at the plurality of bonding areas 20, which is measured using the separation strength measurement device 1000 for measuring the horizontal separation strength, as illustrated in FIG. 12, is 300 gf or more, the optical fiber ribbon 100 according to the present invention can prevent the separation of the pair of optical fibers 10 during the optical cable manufacturing process. When considering the stability of the process, it is preferable for the horizontal separation strength at each bonding area 20 to be configured to be 600 gf or more. In this case, it was confirmed that the separation phenomenon between individual optical fibers 10 is prevented during the optical cable manufacturing process, ensuring even greater process stability.

As described above, the optical fiber ribbon 100 according to the present invention can be flexibly deformed in the width direction, as the horizontal or vertical separation strength or the amount of work required for the task, measured at the plurality of bonding areas 20, is controlled within an appropriate range. This allows for preventing unwanted optical fiber separation in the optical cable manufacturing and installation processes. Additionally, it ensures that workability is maintained during optical fiber separation while preventing optical fiber damage. Furthermore, it can be confirmed that each bonding areas 20 has uniform bonding quality.

While the present invention has been described above with reference to the exemplary embodiments, it may be understood by those skilled in the art that the present invention may be variously modified and changed without departing from the spirit and scope of the present invention disclosed in the claims. Therefore, it should be understood that any modified embodiment that essentially includes the constituent elements of the claims of the present invention is included in the technical scope of the present invention.

## Claims

1. An optical fiber ribbon, comprising:
a plurality of optical fibers bonded side by side,
wherein each adjacent pair of optical fibers among the plurality of optical fibers is bonded through a plurality of bonding areas disposed spaced apart in a length direction of the optical fibers,
wherein the plurality of bonding areas are configured with a plurality of bonding portions, which are spaced apart from each other, and one or more non-bonding portions provided between the plurality of bonding portions,
wherein a non-bonding area disposed between two adjacent bonding areas is included, and in the non-bonding area, a plurality of non-bonded sections, where all optical fibers are not bonded in a cross-section along the length direction of the optical fiber ribbon, is provided spaced apart from each other in a length direction of the optical fiber ribbon,
wherein the bonding portions and the non-bonding portions are formed sequentially and repeatedly at predetermined intervals in the length direction of the optical fiber ribbon, and
wherein a length of each of the bonding portions and non-bonding portions that configure the bonding areas are shorter than a length of the non-bonding area.

2. The optical fiber ribbon of claim 1, wherein the bonding portion is configured such that a plurality of bonding spots are disposed spaced apart at predetermined gaps or disposed in a mutually connected state.

3. The optical fiber ribbon of claim 1, wherein the bonding portion has an elongation of 40 % to 160 %, a scant modulus of 10 MPa to 90 MPa at 2.5 % strain, and a viscosity of 200 mPa-s to 800 mPa-s at 25 °C.

4. The optical fiber ribbon of claim 1, wherein the bonding area has a peak value of a vertical separation strength of between 2 gf and 20 gf.

5. The optical fiber ribbon of claim 1, wherein each of the bonding areas has an overall length of 10 millimeters (mm) to 20 millimeters (mm) and the non-bonding area has a length of 30 millimeters (mm) to 70 millimeters (mm).

6. The optical fiber ribbon of claim 5, wherein each of the bonding areas has an interval of 45 millimeters (mm) to 85 millimeters (mm).

7. The optical fiber ribbon of claim 1, wherein the plurality of bonding portions and the one or more non-bonding portions configuring the bonding area each have a length of 3 millimeters (mm) to 7 millimeters (mm).

8. The optical fiber ribbon of claim 7, wherein a ratio of a length of the bonding portion to a length of the non-bonding portion configuring each of the bonding areas is 0.8 to 1.2.

9. The optical fiber ribbon of claim 1, wherein the bonding area has an average value of a vertical separation strength of 1 gf to 10 gf.

10. The optical fiber ribbon of claim 9, wherein the bonding area has a peak value of a vertical separation strength of between 10 gf and 15 gf.

11. The optical fiber ribbon of claim 1, wherein an amount of work W required for separation of the bonding portion is 0.1 mJ to 2.8 mJ.

12. The optical fiber ribbon of claim 10, wherein a ratio of the peak value of the vertical separation strength of the bonding area to the average value of the vertical separation strength is equal to or greater than 1.5.

13. The optical fiber ribbon of claim 1, wherein the optical fiber ribbon is configured to include N optical fibers,
wherein a position of a bonding area in the length direction of the optical fiber that bonds a nth (where n is a natural number equal to or greater than 1) optical fiber and a (n+1)th optical fiber is disposed at a center of positions of two consecutive bonding areas in the length direction that bonds the (n+1)th optical fiber and a (n+2)th (where n+2 is a natural number equal to or less than N) optical fiber.

14. The optical fiber ribbon of claim 1, wherein the bonding portion that configures the bonding area either bonds an upper portion and lower portion of the bonding portion while the pair of optical fibers to be bonded are in a circumscribed state, or bonds a space between spaced-apart optical fibers when a pair of optical fibers are in a spaced-apart state.

15. The optical fiber ribbon of claim 1, wherein a horizontal separation strength required to separate the pair of optical fibers from each other in a direction parallel to the length direction of the optical fibers at each bonding area is 300 gf or more.

16. An optical fiber ribbon, comprising:
a plurality of optical fibers bonded side by side,
wherein each adjacent pair of optical fibers among the plurality of optical fibers is bonded through a plurality of bonding areas disposed spaced apart in a length direction of the optical fibers,
wherein the bonding areas are disposed with a plurality of bonding spots being pre-interconnected,
wherein a non-bonding area disposed between the two adjacent bonding areas is included,
wherein, in the non-bonding area, a plurality of non-bonded sections, where all optical fibers are not bonded in a cross-section along the length direction of the optical fiber ribbon, is provided spaced apart from each other in a length direction of the optical fiber ribbon, and
wherein a peak value of a vertical separation strength of the bonding area is 2 gf to 20 gf.

17. The optical fiber ribbon of claim 16, wherein the plurality of bonding areas are each configured with a plurality of bonding portions spaced apart from each other and one or more non-bonding portions provided between the plurality of bonding portions.

18. The optical fiber ribbon of claim 17, wherein respective lengths of the bonding portion and the non-bonding portion that configure the bonding area are shorter than a length of the non-bonding area.

19. The optical fiber ribbon of claim 16, wherein the bonding area has an elongation of 40 % to 160 %, a scant modulus of 10 MPa to 90 MPa at 2.5 % strain, and a viscosity of 200 mPa-s to 800 mPa-s at 25 °C.

20. The optical fiber ribbon of claim 16, wherein each of the bonding areas has an overall length of 10 millimeters (mm) to 20 millimeters (mm) and the non-bonding area has a length of 30 millimeters (mm) to 70 millimeters (mm).

21. The optical fiber ribbon of claim 21, wherein each of the bonding areas has an interval of 45 millimeters (mm) to 85 millimeters (mm).

22. The optical fiber ribbon of claim 17, wherein the plurality of bonding portions and the one or more non-bonding portions configuring the bonding area each have a length of 3 millimeters (mm) to 7 millimeters (mm).

23. The optical fiber ribbon of claim 17, wherein a ratio of a length of the bonding portion to a length of the non-bonding portion constituting each of the bonding areas is 0.8 to 1.2.

24. The optical fiber ribbon of claim 16, wherein the bonding area has an average value of a vertical separation strength of 1 gf to 10 gf.

25. The optical fiber ribbon of claim 16, wherein the bonding area has a peak value of a vertical separation strength of between 10 gf and 15gf.

26. The optical fiber ribbon of claim 16, wherein an amount of work W required for separation of the bonding area is 0.1 mJ to 2.8 mJ.

27. The optical fiber ribbon of claim 16, wherein a ratio of the peak value of the vertical separation strength of the bonding area to the average value of the vertical separation strength is equal to or greater than 1.5.

28. The optical fiber ribbon of claim 16, wherein a horizontal separation strength required to separate the pair of optical fibers from each other in a direction parallel to the length direction of the optical fibers at each bonding area is 300 gf or more.
